**Europäisches Patentamt**

**European Patent Office**

**Office européen des brevets**

(19)

(11) Numéro de publication : **0 596 756 A1**

## (12) DEMANDE DE BREVET EUROPEEN

(21) Numéro de dépôt : **93402056.1**

(51) Int. Cl.⁵ : **G01S 13/90**

(22) Date de dépôt : **13.08.93**

(30) Priorité : **06.11.92 FR 9213396**

(43) Date de publication de la demande :
**11.05.94 Bulletin 94/19**

(84) Etats contractants désignés :
**DE FR IT**

(71) Demandeur : **THOMSON-CSF**
**173, Boulevard Haussmann**
**F-75008 Paris (FR)**

(72) Inventeur : **Hermer, Jean-Michel**
**THOMSON-CSF, SCPI, BP 329**
**F-92402 Courbevoie Cédex (FR)**
Inventeur : **Normant, Eric**
**THOMSON-CSF, SCPI, BP 329**
**F-92402 Courbevoie Cédex (FR)**

(74) Mandataire : **Benoit, Monique et al**
**THOMSON-CSF SCPI B.P. 329 50, rue**
**Jean-Pierre Timbaud**
**F-92402 Courbevoie Cédex (FR)**

(54) **Procédé et dispositif de traitement des signaux acquis par un système de cartographie.**

(57) La présente invention concerne un procédé et un dispositif de traitement acquis par un radar (ou sonar) de cartographie en mode SAR, spotlight classique ou spotlight étendu, [c'est-à-dire à mode d'acquisition pour lequel tous les signaux acquis ont une fréquence doppler qui suit, en fonction du temps, une bi-continue quasi-linéaire de même inclinaison dans le plan temps-fréquence Doppler, appelée pente Doppler, et une loi de migration temporelle non linéaire].

L'invention consiste à ramener tous les signaux acquis à une fréquence Doppler quasi-constante comprise dans la bande [- $F_R/2$ ; + $F_R/L$], à appliquer un premier décalage temporel $\tau$ sensiblement égal à la pente Doppler, à effectuer une correction globale des lois de migration, à appliquer éventuellement, dans le cas de faisceaux formant, un deuxième décalage temporel $\tau'$ pour finir par une transformée de Fourier des signaux.

L'avantage de la présente invention est de proposer un traitement commun à toute sorte de modes d'acquisition existants.

FIG.6

EP 0 596 756 A1

La présente invention concerne un procédé et un dispositif de traitement des signaux acquis par un système de cartographie.

Bien que nous ne décrivions par la suite que l'application à un radar de cartographie, il est d'ores et déjà bien entendu que le terme "système" s'applique également au sonar de cartographie. Les radars de cartographie sont soit aéroportés, soit embarqués sur satellites, et leur mission est d'acquérir des signaux provenant de la zone que l'on cherche à étudier en envoyant sur cette zone des impulsions à une fréquence d'émission $f_e$ et à une fréquence de récurrence $F_R$ données. Ces radars sont généralement à visée latérale. On utilise alors la fréquence Doppler des signaux acquis pour déterminer la distance et la position des points de la zone.

On sait à l'heure actuelle que l'utilisation d'un radar à compression d'impulsions permet d'obtenir une bonne résolution en distance. On connaît des radars SAR à visée latérale, SAR étant l'acronyme anglo-saxon de Synthetic Aperture Radar (Radar à ouverture synthétique), dont la particularité en mode classique de prise de vue, est d'avoir un faisceau d'éclairement fixe en azimut au fur et à mesure que le satellite ou l'avion avance sur sa trajectoire.

La nécessité d'obtenir une meilleure résolution en azimut a donné naissance au radar SAR utilisant un mode télescope, plus connu sous le nom emprunté à l'anglais de mode spotlight, dont on peut trouver une description détaillée dans le document "SPOT MODE SAR FOCUSING WITH THE W-K TECHNIQUE" de C. Prati, A. Monti Guarnieri et F. Rocca (IGARSS 91, pages 631, 634). Le principe général du mode spotlight est d'éclairer toujours la même zone au fur et à mesure que le radar avance, et par conséquent, de faire tourner le faisceau du radar au fur et à mesure de son déplacement de telle sorte que cette zone soit toujours éclairée.

Avec ce mode, la bande Doppler $B_d$ qui correspond à l'intervalle de décalage en fréquence Doppler pendant le temps d'éclairement de la zone, est beaucoup plus grande que la bande Doppler nominale du radar, et, consécutivement, la résolution en azimut est meilleure. Cependant, l'inconvénient majeur du mode spotlight est que la longueur de la zone imagée se réduit à la largeur à 3 dB du lobe de l'antenne radar.

Pour cartographier une zone plus étendue qu'en mode spotlight, un mode spotlight amélioré, que nous appellerons mode spotlight étendu pour le distinguer du mode spotlight classique vu précédemment, est une autre alternative. Dans ce troisième mode, la longueur de la zone imagée dépend de la capacité de dépointage de l'antenne en azimut, et non uniquement de la largeur à 3 dB du lobe d'antenne. Il est également nécessaire que la rotation du faisceau en azimut assure la couverture désirée en respectant le temps d'éclairement imposé par la résolution azimutale. Tout comme dans le cas du mode spotlight classique, le temps d'éclairement des échos a été augmenté par rapport au SAR classique.

L'avantage des modes télescopes classique et étendu, par rapport au SAR, est, comme nous l'avons déjà dit, une amélioration de la résolution en azimut, mais il existe cependant une particularité consistant en un phénomène de repliements des fréquences Doppler dans le plan temps-fréquence Doppler, particularité qu'il convient de gérer. En effet, la vidéo brute radar acquise en mode spotlight (fixe ou étendu) comporte les caractéristiques suivantes :

- Elle est échantillonnée suivant l'axe azimut à une fréquence $F_R$ compatible avec la largeur de bande Doppler instantanée du signal afin de respecter le théorème de Shannon sur l'échantillonnage.

- Par contre la largeur de bande Doppler acquise sur chaque écho du sol pendant son temps d'éclairement est supérieure à la fréquence d'échantillonnage (3 à 6 fois typiquement). Cela entraîne donc le repliement du spectre des échos dans le domaine de largeur $F_R$.

Par conséquent, le traitement se doit de gérer cette particularité du signal, ce que n'a pas à faire un traitement SAR standard. Il faut donc particulariser le traitement.

On connaît à l'heure actuelle des solutions pour le mode spotlight classique. Une solution est par exemple exposée dans le document "A TOMOGRAPHIC FORMULATION OF SPOTLIGHT MODE SYNTHETIC APERTURE RADAR" de Munson D.C., J.D. O'Brien et W.K. Jenkins (IEEE, Volume 71, pages 917-925 - Août 1983). Cependant, les solutions précédentes imposent un suréchantillonnage du signal acquis, ce qui a pour conséquence d'augmenter considérablement le volume de traitement du signal. Elles ne sont pas, de plus, applicables au mode spotlight étendu.

En outre, aucune solution n'a été proposée pour le mode spotlight étendu.

Un but de l'invention est de proposer un procédé de traitement multimodes, qui puisse ainsi s'appliquer quel que soit le mode d'acquisition du système de cartographie (SAR classique, spotlight classique ou étendu).

Un autre but de l'invention est que le procédé de traitement proposé ne nécessite pas, dans le cas du spotlight, de suréchantillonnage des signaux à une fréquence supérieure à la fréquence de récurrence $F_R$ du système, ceci afin d'optimiser au mieux les temps de traitement.

Un troisième but de l'invention est de proposer un procédé de traitement qui soit compatible avec les traitements SAR classiques, lesquels effectuent un affinage des échos par corrélation.

Plus précisément, un premier objet de l'invention concerne un procédé de traitement de signaux acquis par un système de cartographie de fréquence d'émission fe de fréquence de récurrence $F_R$, le faisceau d'éclairement tournant éventuellement avec une vitesse de rotation donnée fonctionnant dans un mode d'acquisition pour lequel tous les signaux acquis provenant d'échos d'azimuts différents, ont une fréquence Doppler qui suit, en fonction du temps, une loi continue quasi-linéaire de même inclinaison dans le plan temps-fréquence Doppler, appelée pente Doppler, et une loi de migration, donnant la distance du système aux échos en fonction du temps, non linéaire, le procédé étant caractérisé en ce qu'il consiste à effectuer sur les signaux acquis, les étapes suivantes :

- ramener chaque signal acquis à une fréquence Doppler quasi-constante, comprise dans la bande de fréquence [- $F_R/2$ ; + $F_R/2$] ;
- appliquer, sur chaque signal de fréquence Doppler quasi-constante, un premier décalage temporel $\tau$ sensiblement égal à la pente Doppler ;
- effectuer, dans le domaine temporel, une correction des lois de migration, de façon à ce que la distance du système à chaque écho soit quasi- constante dans le temps ;
- appliquer, éventuellement, sur chaque signal corrigé, un second décalage temporel $\tau'$ proportionnel à la vitesse de rotation de faisceau, de manière à synchroniser tous les échos ;
- faire la transformée de Fourier des signaux.

Un second objet de l'invention concerne un dispositif de traitement pour la mise en oeuvre du procédé selon les revendications 1 à 6, caractérisé en ce qu'il comporte :

- un module de génération d'une rampe de fréquence de pente opposée à la pente Doppler ;
- un module de multiplication effectuant la multiplication des signaux acquis par la rampe de fréquence ;
- des premiers moyens pour appliquer aux signaux issus du module de multiplication un décalage temporel $\tau$ proportionnel, d'un facteur de proportionnalité quasi-égal à la pente Doppler, à la fréquence Doppler des signaux ;
- des seconds moyens pour effectuer une correction des signaux dans le domaine temporel, de façon à rendre la distance du système à chaque écho quasi-constante dans le temps ;
- des troisièmes moyens pour appliquer aux signaux issus des moyens de correction un décalage temporel $\tau'$ proportionnel à la vitesse de rotation du faisceau, de manière à synchroniser tous les signaux ;
- un module effectuant la Transformée de Fourier des signaux issus des troisièmes moyens.

L'invention, ainsi que ses avantages, seront mieux compris au vu de la description suivante, faite en référence aux figures annexées :

- La figure 1 illustre le principe de l'acquisition des signaux échos en mode spotlight étendu ;
- La figure 2 montre, dans le plan temps-fréquence Doppler, les lois suivies théoriquement par les signaux échos acquis provenant des points $E_d$, $E_i$, $E_c$, $E_j$, $E_f$ de la figure 1, et ce que voit le radar en pratique ;
- La figure 3a donne, dans le plan temps-fréquence Doppler, l'allure des signaux à l'issue de la première étape du procédé de traitement selon l'invention ;
- La figure 3b illustre les courbes de migration, dans le plan temps-distance, correspondant aux signaux de la figure 3a ;
- La figure 4a montre, dans ce même plan, l'allure des signaux après la seconde étape du procédé de traitement selon l'invention ;
- La figure 4b illustre les courbes de migration, dans le plan temps-distance, correspondant aux signaux de la figure 4a ;
- La figure 5 illustre, dans le même plan, l'allure des signaux après la dernière étape du procédé selon l'invention ;
- La figure 6 est un exemple de réalisation d'un dispositif pour la mise en oeuvre du procédé selon l'invention.

Définissons tout d'abord tout ce qu'il y a de commun entre le mode SAR classique, le mode spotlight fixe et le mode spotlight étendu :

Pour ces trois modes d'acquisition, les signaux acquis par le système suivent, dans le plan temps-fréquence Doppler, une loi quasi-linéaire, et une loi de migration donnant la distance R du système à l'écho en fonction du temps, non-linéaire.

Ces deux lois peuvent classiquement s'écrire :

$$\begin{cases} R\,(t) = \dfrac{\lambda}{2}\left(f_d\,t + \dfrac{1}{2}\,f'_d\,t^2\right) \\ f_{dop}\,(t) = f'_d\,t + f_d \end{cases}$$

équations dans lesquelles :

$\lambda$    est la longueur d'onde du radar,

$f_d$    est la fréquence Doppler d'un écho,

$f'_d$    est la pente Doppler, dérivée temporelle de la fréquence doppler $f_d$, c'est-à-dire la pente de la droite dans une représentation dans le plan temps-fréquence Doppler.

Dans le SAR classique, tous les points échos sont vus par le système avec les mêmes variations d'angle de prise de vue. Les lois de migration dans le plan distance-fréquence Doppler sont toutes superposées, quel que soit l'azimut du point considéré.

Il n'en va pas de même pour les modes spotlight classique ou étendu, pour lesquels il y a rotation du faisceau du système quand ce dernier avance. Il n'est donc pas possible de faire, pour des deux modes, un traitement comme celui qui est généralement utilisé en SAR classique.

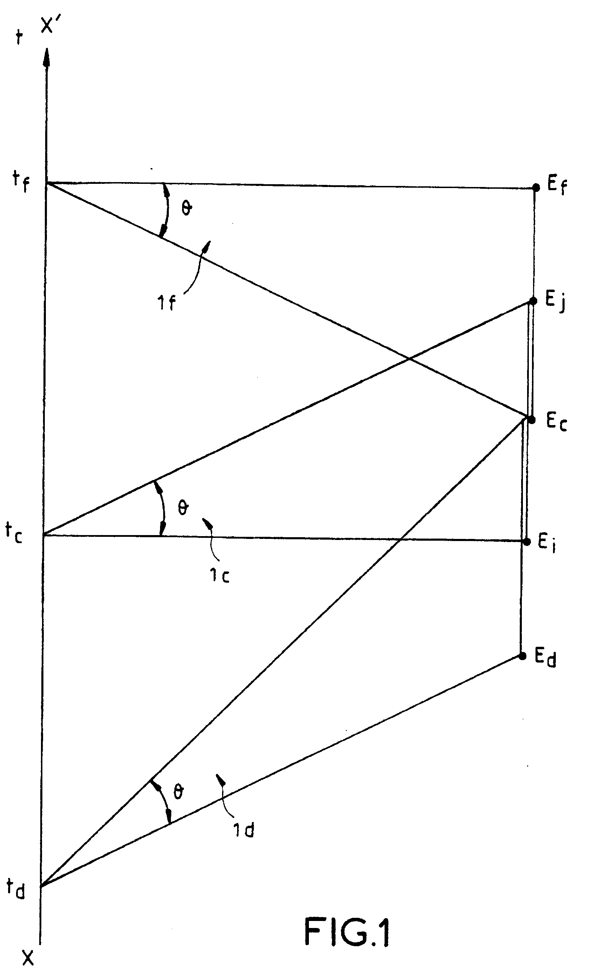

La figure 1 illustre le principe de l'acquisition des signaux échos en mode spotlight étendu :

Sur cette figure 1, l'axe XX' représente la trajectoire du système de cartographie à vitesse sensiblement constante, et la droite passant par les points $E_d$, $E_i$, $E_c$, $E_j$ et $E_f$, une portion azimutale de la zone explorée, parallèle à l'axe XX'. Les points précédents ont été choisis séparés en fréquence Doppler de $F_R/2$ les uns des autres.

L'acquisition d'un signal écho provenant d'un point de la zone selon le mode spotlight étendu s'effectue dès que le faisceau du système intercepte ce point. Comme illustré sur la figure 1, le faisceau 1d à l'instant $t_d$ termine juste l'acquisition des signaux provenant du point $E_d$, et commence l'acquisition des signaux provenant du point $E_c$. Il en est de même pour le faisceau 1c à l'instant $t_c$, vis-à-vis des points $E_i$ et $E_j$, et pour le faisceau 1f, à l'instant $t_f$, vis-à-vis des points $E_c$ et $E_f$.

On supposera par la suite que le système a commencé l'acquisition des signaux à un temps t' antérieur à $t_d$, et continue cette acquisition jusqu'à un temps t" postérieur à $t_d$.

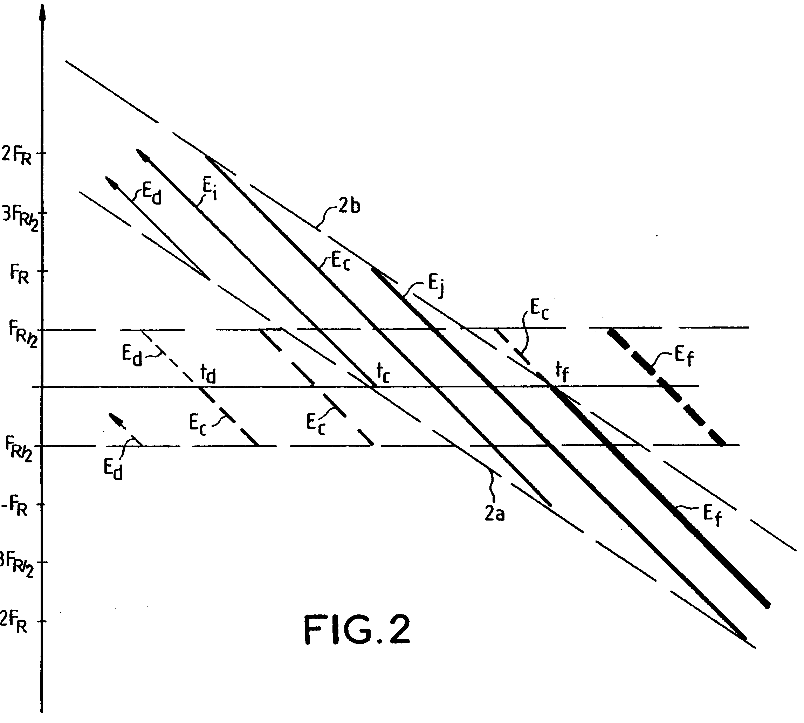

Avec les hypothèses précédentes, on a représenté simultanément sur la figure 2 la loi en fréquence Doppler théoriquement suivie par les signaux échos en fonction du temps, et le phénomène de repliement des fréquences dû, en pratique, à la fréquence de récurrence $F_R$ du système.

Pour faciliter la compréhension, on a pris comme conventions :

- de représenter en pointillés tous les signaux parasites dûs aux repliements des fréquences ;
- de distinguer les lois linéaires relatives à chaque point par des traits (continus ou en pointillés) d'épaisseurs différentes, référencés par le point correspondant.

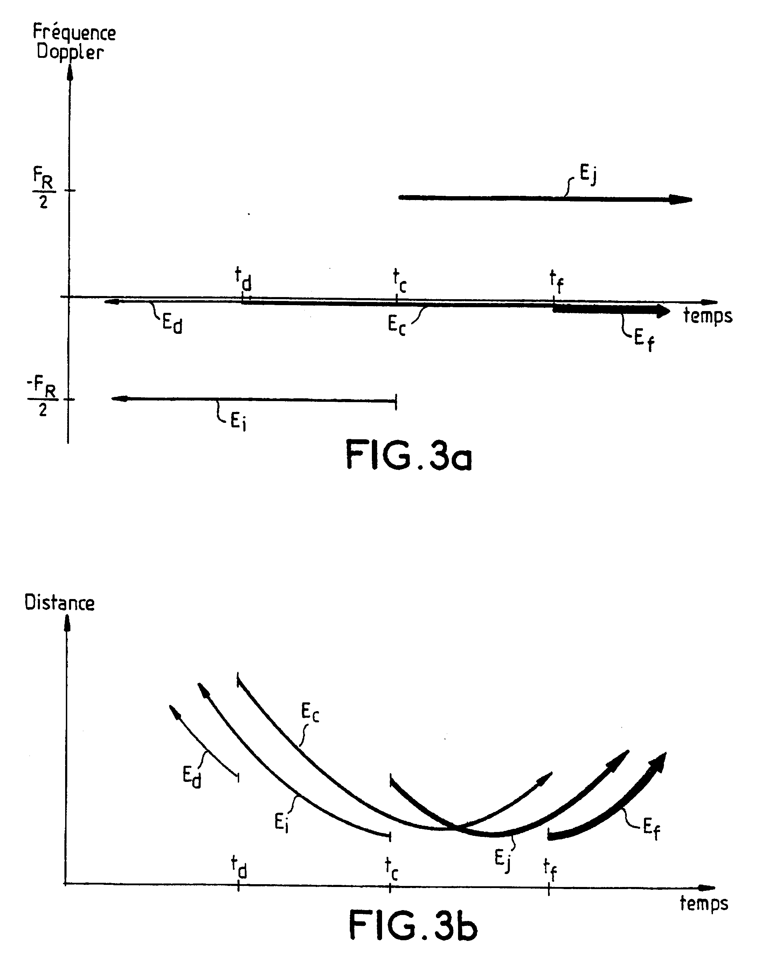

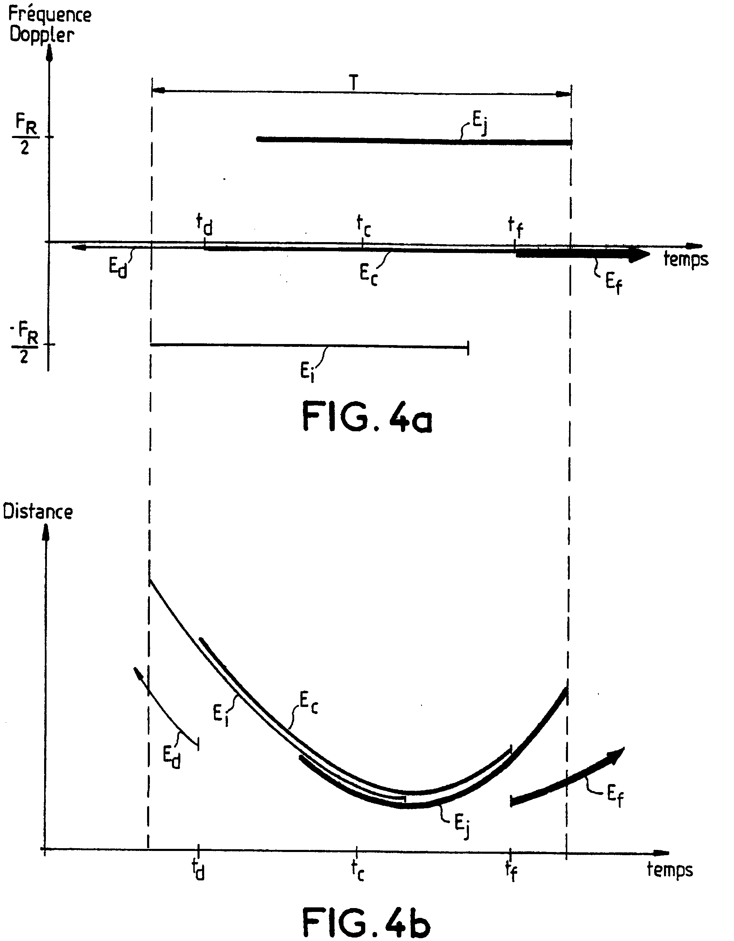

Cette dernière convention est également valable pour les figures 3a, 3b, 4a et 4b.

Une propriété caractéristique du mode spotlight est que les lois précédentes sont comprises entre deux courbes 2a, 2b, quasi-linéaires, de pente proportionnelle à la vitesse de rotation de faisceau.

Les traits en pointillés, représentant les repliements des fréquences, résultent du fait que la fréquence de récurrence $F_R$ du système réalise un échantillonnage naturel des signaux.

Les lois de migration dans le plan temps-distance, sont, quant à elles, représentées sur la figure 3b.

La première étape du procédé selon l'invention consiste à ramener de façon non ambigüe chaque signal acquis à une fréquence Doppler quasi-constante, comprise dans la bande de fréquence [- $F_R/2$ ; + $F_R/2$]. Dans le cas de figure illustré sur les figures 1 et 2, le résultat de cette opération est celui représenté par la figure 3a. Les signaux relatifs aux points $E_d$, $E_c$ et $E_f$ ont une fréquence Doppler nulle, et les signaux relatifs aux points $E_i$ et $E_j$ ont des fréquences respectives + $F_R/2$, - $F_R/2$. Cette première étape n'a aucune influence sur les lois de migration temporelle qui ont toujours l'allure représentée sur la figure 3b.

La deuxième étape du procédé selon l'invention a pour but de superposer les lois de migration sur un intervalle de temps T égal au temps d'éclairement total des échos $E_i$ à $E_j$, incluant l'intervalle [$t_d$, $t_f$]. Pour ce faire, on applique sur chaque signal de fréquence Doppler quasi-constante un premier décalage temporel $\tau$ sensiblement égal à la pente Doppler. Le résultat est illustré sur la figure 4a : les courbes $E_d$, $E_c$ et $E_f$ n'ont subi aucun décalage puisque leur fréquence Doppler était nulle. Par contre, le signal relatif au point $E_i$ avait une fréquence Doppler égale à - $F_R/2$ sur la figure 3a, et celui relatif au point $E_j$ avait une fréquence Doppler égale à + $F_R/2$. Il en résulte une avance temporelle pour le signal relatif à $E_i$, et un retard pour le signal relatif à $E_f$. A l'issue de cette deuxième étape, les courbes de migration temporelle relatives aux points $E_i$, $E_c$ et $E_j$ se superposent sur l'intervalle de temps T, comme le montre la figure 4b.

Il est à présent possible d'effectuer une correction globale des lois de migration dans le temps, de façon à ce que la distance du système à chaque point écho $E_i$, $E_c$, $E_j$ soit quasi-constante dans le temps sur l'intervalle de temps T, cette distance étant typiquement égale à la distance nominale de l'écho $E_c$, c'est-à-dire à la distance correspondant au temps milieu de l'intervalle de temps [-$T_e/2$ ; +$T_e/2$]. C'est ce que se propose de faire la troisième étape du procédé selon l'invention.

Cette correction des migrations dans le domaine temporel peut consister en une interpolation de type Lagrangien, ou Spline. Préférentiellement, l'interpolation est effectuée pour chaque case-distance, pour chacune des récurrences constituant le signal. Le fait de pouvoir faire une correction globale, c'est-à-dire simultanément pour un grand nombre d'échos, optimise bien entendu le temps de traitement.

Une quatrième étape du procédé selon l'invention consiste à appliquer un second décalage temporel $\tau'$ sur chaque signal corrigé, $\tau'$ étant proportionnel à la vitesse de rotation de l'antenne. Cette étape est inutile dans le cas du SAR, mais elle est nécessaire dans les modes spotlight classique et étendu car, même si les lois de migration ont été superposées puis corrigées par les deuxième et troisième étapes, elles n'ont pas les mêmes instants de début et de fin, comme le montre la figure 4b. Le seconde décalage temporel $\tau'$ permet de synchroniser ces lois de migration.

La cinquième et dernière étape du procédé selon l'invention consiste à effectuer la transformée de Fourier des signaux obtenus à la quatrième étape.

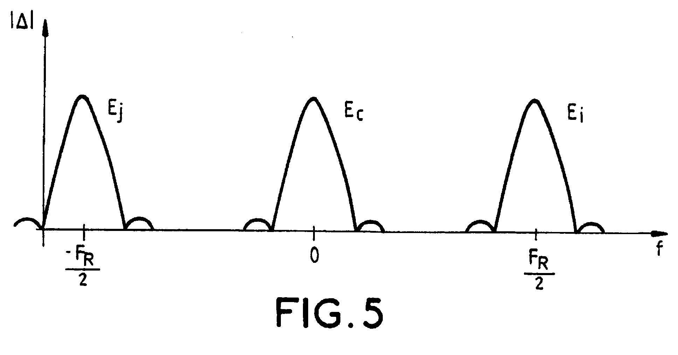

En effet, chaque signal écho correspondant à une fréquence pure, une simple transformée de Fourier suffit à l'affiner. On exécute avantageusement cette transformation de Fourier sur un temps égal à $T_e$, de manière à obtenir une image à pleine résolution. Le résultat de cette cinquième étape est schématisé sur la figure 5.

Le procédé selon l'invention tel qu'il vient d'être décrit peut comporter des améliorations. Il peut notamment comporter une étape de correction complémentaire des erreurs de phase résiduelles sur l'axe azimutal, de manière à garantir la qualité de la réponse impulsionnelle.

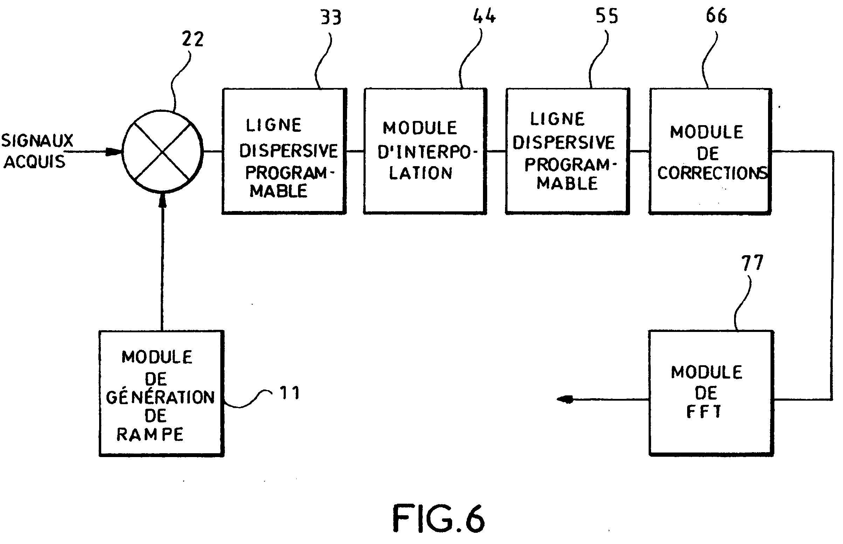

La figure 6 est un exemple de réalisation d'un dispositif de traitement pour la mise en oeuvre du procédé selon l'invention :

Pour assurer la réalisation de la première étape du procédé selon l'invention, le dispositif peut comporter un module 11 de génération d'une rampe de fréquence de pente opposée à celle de la pente Doppler, et un module de multiplication 22 qui effectue la multiplication des signaux qu'il reçoit à ses entrées, à savoir, d'une part les signaux acquis par le système de cartographie, et d'autre part, la rampe de fréquence issue du générateur 11.

Les signaux délivrés par le module de multiplication 22, et relatifs au même écho, ont une fréquence Doppler constante, comprise dans la bande de fréquence [- $F_R/2$ ; + $F_R/2$]. Ceci permet de s'affranchir des problèmes de repliements de fréquence précédemment cités.

Pour effectuer la deuxième étape du procédé selon l'invention, le dispositif est équipé de moyens 33 qui appliquent aux signaux issus du module de multiplication 22, un décalage temporel $\tau$, sensiblement égal à la pente Doppler. Ces moyens 33 peuvent être constitués par une ligne dispersive de fréquence. Les signaux sont ensuite fournis à des seconds moyens 44 effectuant, dans le domaine temporel, une correction des lois de migration selon une interpolation du type Lagrange ou Spline.

Les signaux corrigés sont ensuite à nouveau décalés dans le temps par des troisièmes moyens 55, par exemple une ligne dispersive programmable, permettant de synchroniser tous ces signaux dans l'intervalle de temps T.

Un module 77 effectue alors la transformée de Fourier, préférentiellement une FFT, des signaux délivrés par les troisièmes moyens 55.

Dans le but de garantir la qualité des réponses impulsionnelles, le dispositif selon l'invention peut être, en outre, doté d'un module de correction supplémentaire 66, placé en amont du module de transformée de Fourier 77, et réalisant une correction des erreurs de phase résiduelles sur l'axe azimut.

La présente invention comporte de nombreux avantages :

Elle constitue tout d'abord le premier traitement adapté au mode spotlight étendu.

Elle peut s'appliquer tout aussi bien aux systèmes d'acquisition embarqués sur avion ou sur satellites, quel que soit le mode d'acquisition. Grâce à cette propriété, un même processeur SAR peut être utilisé en fin de traitement.

Enfin, le procédé selon l'invention ne nécessite aucun suréchantillonnage des signaux acquis, ce qui aurait pour conséquence une augmentation du temps de traitement ou des capacités de calcul du dispositif.

**Revendications**

1. Procédé de traitement de signaux acquis par un système de cartographie de fréquence d'émission $f_e$ et fréquence de récurrence $F_R$, le faisceau d'éclairement tournant éventuellement avec une vitesse de rotation donnée, le système fonctionnant dans un mode d'acquisition pour lequel tous les signaux acquis provenant d'échos d'azimuts différents, ont une fréquence Doppler qui suit, en fonction du temps, une loi continue quasi-linéaire de même inclinaison dans le plan temps-fréquence Doppler, appelée pente Doppler, et une loi de migration, donnant la distance du système aux échos en fonction du temps, non linéaire, le procédé étant caractérisé en ce qu'il consiste à effectuer sur les signaux acquis, les étapes suivantes :
   - ramener chaque signal acquis à une fréquence Doppler quasi-constante, comprise dans la bande de fréquence [- $F_R/2$ ; + $F_R/2$] ;
   - appliquer, sur chaque signal de fréquence Doppler quasi-constante, un premier décalage temporel $\tau$ sensiblement égal à la pente Doppler ;
   - effectuer, dans le domaine temporel, une correction des lois de migration, de façon à ce que la distance du système à chaque écho soit quasi- constante dans le temps ;
   - appliquer éventuellement, sur chaque signal corrigé, un second décalage temporel $\tau'$ proportionnel à la vitesse de rotation du faisceau, de manière à synchroniser tous les échos ;
   - faire la transformée de Fourier des signaux.

2. Procédé de traitement selon la revendication 1, caractérisé en ce que, pour ramener chaque signal acquis à une fréquence Doppler quasi-constante, on multiplie des échantillons de ce signal par un signal dont la loi, dans le plan temps-fréquence Doppler, est une droite quasi-linéaire de pente opposée à la pente Doppler.

3. Procédé de traitement selon l'une quelconque des revendications précédentes, caractérisé en ce que ladite correction consiste à effectuer, pour chaque case-distance, une interpolation exécutée pour chacune des récurrences constituant les signaux.

4. Procédé de traitement selon l'une quelconque des revendications précédentes, caractérisé en ce que ladite correction est une interpolation de Lagrange.

5. Procédé de traitement selon l'une quelconque des revendications 1, 2 et 3, caractérisé en ce que ladite correction est une interpolation de SPLINE.

6. Dispositif de traitement pour la mise en oeuvre du procédé selon les revendications 1 à 5, caractérisé en ce qu'il comporte :
   - un module (11) de génération d'une rampe de fréquence de pente opposée à la pente Doppler ;
   - un module de multiplication (22) effectuant la multiplication des signaux acquis par la rampe de fréquence ;
   - des premiers moyens (33) pour appliquer aux signaux issus du module de multiplication (22) un décalage temporel $\tau$ sensiblement égal à la pente Doppler ;
   - des seconds moyens (44) pour effectuer une correction des signaux dans le domaine temporel, de façon à rendre la distance du système à chaque écho quasi-constante dans le temps ;
   - des troisièmes moyens (55) pour appliquer aux signaux issus des moyens de correction (44) un décalage temporel $\tau'$ proportionnel à la vitesse de rotation du faisceau, de manière à synchroniser tous les signaux ;
   - un module (77) effectuant la Transformée de Fourier des signaux issus des troisièmes moyens (55).

7. Dispositif de traitement selon la revendication 6, caractérisé en ce que les premiers et troisièmes moyens (33, 55) sont des lignes dispersives programmables.

8. Dispositif de traitement selon l'une quelconque des revendications 6 et 7, caractérisé en ce qu'il comporte en outre, un module de correction (66) supplémentaire des erreurs de phases résiduelles sur l'axe azimut.

FIG.1

FIG.2

EP 0 596 756 A1

FIG.3a

FIG.3b

Fréquence
Doppler

$\frac{F_R}{2}$

T

$E_j$

$t_d$    $t_c$    $t_f$

temps

$E_d$

$E_c$

$E_f$

$-\frac{F_R}{2}$

$E_i$

# FIG. 4a

Distance

$E_c$

$E_i$

$E_d$

$E_f$

$E_j$

$t_d$    $t_c$    $t_f$    temps

# FIG. 4b

FIG.5

FIG.6

EP 0 596 756 A1

EP 0 596 756 A1

Office européen
des brevets

**RAPPORT DE RECHERCHE EUROPEENNE**

Numero de la demande

EP 93 40 2056

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | IEEE TRANSACTIONS ON ACOUSTICS,SPEECH AND SIGNAL PROCESSING vol. 37, no. 12 , Décembre 1989 , NEW YORK US pages 2131 - 2147 XP99510 D.C. MUNSON ET AL. 'A Signal Processing View of Strip-Mapping Synthetic Aperture Radar' * page 2143, alinéa VI * | 1,6 | G01S13/90 |
| A | MELECON 87, MEDITERRANEAN ELECTROTECHNICAL CONFERENCE 1987 , ITALY pages 705 - 709 S. BARBAROSSA ET AL. 'The Spotlight mode to solve high resolution problems in imaging Radars' * page 705, colonne de gauche - page 707, colonne de droite * | 1,6 | |
| A | IEEE TRANSACTIONS ON GEOSCIENCE AND REMOTE SENSING vol. 30, no. 3 , Mai 1992 , NEW YORK US pages 550 - 558 XP290466 C. PRATI ET AL. 'Focusing SAR Data with Time-Varying Doppler Centroid' * alinéa I, IV * | 1,6 | **DOMAINES TECHNIQUES RECHERCHES (Int.Cl.5)** G01S |

Le présent rapport a été établi pour toutes les revendications

| Lieu de la recherche | Date d'achèvement de la recherche | Examinateur |
|---|---|---|
| LA HAYE | 8 Février 1994 | Zaccà, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

13